# FASCICULE DE BREVET EUROPEEN

(11) **EP 2 954 254 B1**
(45) Date de publication et mention de la délivrance du brevet: **26.06.2019**
(21) Numéro de dépôt: 14709726.5
(22) Date de dépôt: 07.02.2014
(51) Int. Cl.: F21S 8/08, H05B 37/02, F21V 23/04, F21W 111/02, F21Y 115/10, G05B 15/02

(54) **SYSTÈME DE COMMANDE D'ÉCLAIRAGE**
BELEUCHTUNGSSTEUERUNGSSYSTEM
LIGHTING CONTROL SYSTEM

(30) Priorité: 07.02.2013 FR 1351050
(43) Date de publication de la demande: 16.12.2015
(73) Titulaire: Ineso Europe SAS, 38600 Fontaine (FR)
(72) Inventeur: DHERBASSY, Fabien, F-38000 Grenoble (FR)
(74) Mandataire: Cabinet Beaumont
(86) Numéro de dépôt international: PCT/FR2014/050241
(87) Numéro de publication internationale: WO 2014/122408

(56) Documents cités:
- EP-A1- 1 251 721
- WO-A1-2011/106868
- WO-A2-2012/166369
- KR-A- 20120 093 741
- US-A1- 2007 109 142
- US-A1- 2007 121 323
- US-B1- 6 211 627

## Description

### DOMAINE

La présente description concerne un système de commande d'éclairage comprenant des contrôleurs de lampadaires sans fil, et en particulier un procédé et un dispositif d'installation pour installer un contrôleur de lampadaire sans fil dans un système de commande d'éclairage, et un système de commande d'éclairage.

### ART ANTÉRIEUR

Les réseaux d'éclairage, et en particulier les réseaux d'éclairage urbains, représentent une proportion relativement élevée de l'énergie totale utilisée dans les grandes villes et les cités. On peut obtenir une forte réduction de la consommation d'énergie en remplaçant les éléments d'éclairage à incandescence traditionnels des lampadaires urbains par des éléments lumineux à LED à faible consommation d'énergie.

En outre, on a proposé d'utiliser des systèmes de commande d'éclairage intelligents pour économiser de l'énergie. De tels systèmes permettent d'éteindre des lampadaires ou de réduire leur luminosité en dehors des heures de pointe, par exemple à certaines heures de la nuit. De tels systèmes impliquent en général l'ajout d'un contrôleur de lampadaire pour chaque lampadaire, ce qui permet de contrôler de façon indépendante l'éclairage de chaque lampadaire.

Bien que les avantages de tels systèmes soient clairs, l'installation de ces systèmes peut être consommatrice de temps et coûteuse. En effet, il y a des milliers de lampadaires dans une ville ou une cité typique, et les procédés connus pour installer des contrôleurs de lampadaires sont loin d'être efficaces, et il existe donc un problème technique pour fournir un procédé et un dispositif pour l'installation de contrôleurs de lampadaires dans de tels systèmes de commande d'éclairage.

La demande internationale publiée sous le numéro WO2011/106868 concerne un procédé et dispositif pour commander les lampadaires.

La demande de brevet américain US2007/0109142 concerne un dispositif de commande électronique de lampadaire et un procédé de surveillance.

Le document EP1251721 concerne un système de surveillance distant pour des lampadaires.

Le document KR20120093741 concerne un système distant de commande de variateur de lampadaire LED.

La demande de brevet international publiée sous le numéro WO2012/166369 concerne un dispositif en réseau de commande d'éclairage comprenant un dispositif RFID.

La demande de brevet américain US2007/0121323 concerne un lampadaire capable d'être lié par une ligne de signal par un contrôleur, et comprenant une mémoire mémorisant un identificateur.

Le document US6211627 concerne un système d'éclairage comprenant un dispositif permettant à l'utilisateur de configurer la distribution de puissance vers le circuit à réduire ou augmenter en intensité.

### RESUME

Un objet de modes de réalisation de la présente description est de résoudre au moins partiellement un ou plusieurs problèmes de l'art antérieur.

Selon un aspect, on prévoit un procédé d'installation d'un nouveau contrôleur de lampadaire sans fil dans un système de commande d'éclairage , le procédé comprenant les étapes suivantes : lire, par un dispositif mobile d'installation, des paramètres de configuration à partir d'un élément, lisible par machine, du nouveau contrôleur de lampadaire sans fil ; déterminer des données de position indiquant une position courante du dispositif mobile d'installation ; caractérisé en ce que : le système de commande d'éclairage comprend un serveur central, des contrôleurs de lampadaire sans fil et une pluralité de modules de segment, chacun des modules de segment étant en communication avec un certain nombre de contrôleurs de lampadaire sans fil qui sont dans sa zone environnante, chaque contrôleur de lampadaire sans fil d'un segment étant à portée directe de communications sans fils, ou par l'intermédiaire d'un ou plusieurs autres contrôleurs de lampadaire sans fil, de son module de segment correspondant, les modules de segment étant couplés au serveur central ; le procédé comprenant en outre les étapes suivantes : transmettre, par le dispositif mobile d'installation, les paramètres de configuration et les données de position au serveur central; et recevoir, par le nouveau contrôleur de lampadaire sans fil par l'intermédiaire d'un module de segment sélectionné sur la base des données de position, un code d'activation généré par le serveur central sur la base au moins partiellement d'un ou plusieurs des paramètres de configuration.

Selon un mode de réalisation, les paramètres de configuration comprennent un ou plusieurs des éléments suivants : une clé chiffrée associée au contrôleur de lampadaire sans fil ; un identificateur associé au contrôleur de lampadaire sans fil ; et des données indiquant des fonctions du contrôleur de lampadaire sans fil.

Selon un mode de réalisation, l'élément lisible par une machine est l'un des éléments suivants : une image lisible par une caméra du dispositif d'installation mobile ; et un transpondeur sans fil lisible par une interface de communication en champ proche du dispositif d'installation mobile.

Selon un mode de réalisation, le serveur central est adapté à comparer la clé à une clé de référence associée au contrôleur de lampadaire sans fil.

Selon un mode de réalisation, le procédé comprend en outre : mémoriser par le serveur central les données de position dans une mémoire en association avec un identificateur du contrôleur de lampadaire sans fil; et transmettre par le serveur central les données de position au contrôleur de lampadaire sans fil.

Selon un aspect, on prévoit un système de commande d'éclairage comprenant des contrôleurs de lampadaire sans fil, caractérisé en ce que le système de commande d'éclairage comprend en outre un serveur central et une pluralité de modules de segment, chacun des modules de segment étant en communication avec un certain nombre de contrôleurs de lampadaire sans fil qui sont dans sa zone environnante, chaque contrôleur de lampadaire sans fil d'un segment étant à portée directe de communications sans fils, ou par l'intermédiaire d'un ou plusieurs autres contrôleurs de lampadaire sans fil, de son module de segment correspondant, les modules de segment étant couplés au serveur central, le serveur central étant adapté à : recevoir, à partir d'un dispositif mobile d'installation, des paramètres de configuration associés à un nouveau contrôleur de lampadaire sans fil à installer dans le système, et des données de position associées au dispositif mobile d'installation ; générer un code d'activation sur la base au moins partiellement d'un ou plusieurs des paramètres de configuration ; sélectionner, sur la base des données de position, l'un de la pluralité de modules de segment du système de commande d'éclairage ; et transmettre le code d'activation au nouveau contrôleur de lampadaire sans fil par l'intermédiaire du module de segment sélectionné. Selon un mode de réalisation, les paramètres de configuration comprennent une clé chiffrée associée au contrôleur de lampadaire sans fil, et le code d'activation comprend ladite clé.

### BREVE DESCRIPTION DES DESSINS

Les caractéristiques et avantages susmentionnés, et d'autres, apparaîtront clairement à la lecture de la description détaillée suivante de modes de réalisation, faite à titre d'illustration et non de limitation, en référence aux dessins joints, dans lesquels :
la figure 1 illustre un réseau d'éclairage urbain selon un exemple de réalisation de la présente description ;
la figure 2 illustre schématiquement un système de commande d'éclairage selon un mode de réalisation de la présente description ;
la figure 3 illustre schématiquement plus en détail un dispositif d'installation mobile du système de la figure 2 selon un mode de réalisation de la présente description ;
la figure 4 illustre schématiquement plus en détail un contrôleur de lampadaire sans fil du système de la figure 2 selon un exemple de réalisation de la présente description ;
la figure 5 illustre schématiquement plus en détail un serveur central du système de la figure 2 selon un exemple de réalisation de la présente description ; et
les figures 6A et 6B sont des organigrammes représentant des opérations dans un procédé d'installation d'un contrôleur de lampadaire sans fil selon un exemple de réalisation de la présente description.

### DESCRIPTION DÉTAILLÉE

Bien que dans la description suivante, des modes de réalisation soient décrits en référence à un système commande d'éclairage urbain, il sera clair pour l'homme de l'art que les techniques décrites ici pourraient également s'appliquer à d'autres types de systèmes de commande d'éclairage, comme des systèmes de commande destinés à contrôler l'éclairage dans des structures relativement grandes, comme de grands monuments, des bâtiments ou similaires.

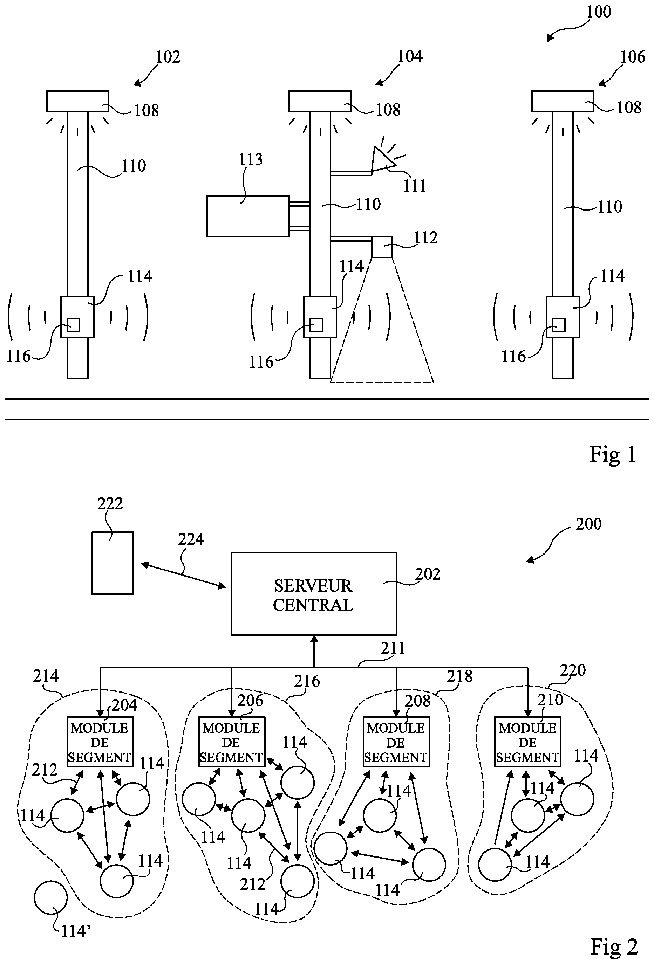

La figure 1 illustre une partie d'un réseau d'éclairage urbain 100 comprenant trois lampadaires 102, 104 et 106. Bien sûr, le réseau d'éclairage complet peut comprendre beaucoup plus que trois lampadaires, par exemple des centaines ou des milliers de lampadaires.

Chaque lampadaire 102, 104, 106 comprend un ou plusieurs éléments lumineux 108 comprenant par exemple une ou plusieurs LED, et par exemple orientés pour éclairer une certaine zone, comme une rue en contre-bas. Chacun des éléments 108 est par exemple suspendu à un poteau de lampadaire 110 correspondant.

En plus de l'élément lumineux 108, chaque lampadaire 102, 104, 106 peut en outre comprendre d'autres éléments ou dispositifs d'éclairage. Par exemple, comme cela est représenté en figure 1, le lampadaire 104 comprend par exemple un spot lumineux à LED 111, un détecteur de mouvement ou de présence 112, et un panneau de LED 113. Le détecteur de mouvement ou de présence 112 détecte par exemple le passage d'un piéton ou d'un véhicule à proximité du lampadaire, et commande en réponse un ou plusieurs éléments lumineux 108, par exemple provoquant l'allumage de l'élément lumineux ou l'augmentation de sa luminosité. Le panneau de LED 113 permet par exemple l'affichage d'informations, comme des informations de trafic routier ou des publicités.

Chacun des lampadaires 102, 104 et 106 comprend en outre un contrôleur de lampadaire sans fil 114, représenté par des boîtes en figure 1, qui est par exemple en communication sans fil avec un ou plusieurs autres contrôleurs de lampadaire sans fil du voisinage, et commande le ou les éléments lumineux du lampadaire correspondant. Par exemple, chaque lampadaire est couplé à une ligne d'alimentation (non représentée en figure 1) par l'intermédiaire du contrôleur de lampadaire sans fil 114, de sorte que les contrôleurs de lampadaire sans fil 114 peuvent contrôler lequel des éléments lumineux est alimenté. Afin de faire varier la luminosité des éléments lumineux à LED, le courant fourni à chaque élément à LED est par exemple contrôlé par un dispositif de pilotage de LED ou un ballast électrique du contrôleur de lampadaire sans fil.

Comme cela va être décrit plus en détail ci-après, chaque contrôleur de lampadaire sans fil 114 comprend par exemple un élément lisible par une machine 116, comme un code QR (à réponse rapide) ou similaire, pour utilisation pendant l'installation. Par exemple, l'élément lisible par une machine 116 est physiquement attaché à un boîtier du contrôleur de lampadaire sans fil 114.

La figure 2 illustre une vue d'ensemble du système de commande d'éclairage selon un exemple de réalisation.

Un serveur central 202 est par exemple en communication avec un certain nombre de modules de segment 204, 206, 208 et 210. Le serveur central 202 est par exemple couplé aux modules de segment 204 à 210 par l'intermédiaire d'un réseau filaire 211, bien que dans des variantes de réalisation, la connexion puisse être au moins partiellement sans fil. Bien que la figure 2 illustre un exemple dans lequel il y a quatre modules de segment, dans des variantes de réalisation le système de commande d'éclairage 200 pourrait comprendre moins de quatre de ces modules, par exemple au moins deux, ou beaucoup plus que quatre modules, par exemple des dizaines ou des centaines.

Chacun des modules de segment 204 à 210 est par exemple en communication avec un certain nombre de contrôleurs de lampadaire sans fil 114 qui sont dans sa zone environnante, définissant des segments correspondants 214, 216, 218 et 220 en figure 2 associés aux modules de segment 204, 206, 208 et 210, respectivement.

Chaque contrôleur de lampadaire sans fil 114 est supposé être installé dans un lampadaire correspondant (non illustré en figure 2). Les contrôleurs de lampadaire sans fil 114 sont représentés par des cercles en figure 2. Chaque contrôleur de lampadaire sans fil 114 est par exemple associé à un seul module de segment 204, et le nombre de contrôleurs 114 associé à chacun des modules de segment 204 à 210 pourrait être quelconque entre un et plusieurs milliers.

Chacun des contrôleurs de lampadaire sans fil 114 est par exemple à portée directe de communication sans fil de son module de segment 204 correspondant. Toutefois, dans des variantes de réalisation, la communication entre l'un quelconque des modules de segment et un ou plusieurs des contrôleurs de lampadaire sans fil 114 de son segment pourrait se faire par l'intermédiaire d'un ou plusieurs autres contrôleurs de lampadaire sans fil 114, qui peuvent relayer les communications. Chaque contrôleur de lampadaire sans fil 114 est aussi par exemple capable de communiquer sans fil avec un ou plusieurs autres contrôleurs de lampadaire sans fil 114 du même segment.

Les contrôleurs de lampadaire sans fil 114 illustrés en figure 2 sont supposés être intégrés dans le système, en d'autres termes ils ont été installés et activés.

La figure 2 illustre aussi un nouveau contrôleur de lampadaire sans fil 114' qui doit être ajouté au système 200. Par conséquent, il n'est par exemple pas encore capable de communication sans fil avec l'un quelconque des autres contrôleurs de lampadaire sans fil 114, et il n'a encore été affecté à aucun module de segment ou segment. Un dispositif d'installation 222 est utilisé pendant l'installation de nouveaux contrôleurs de la sorte. Le dispositif d'installation 222 est par exemple en communication avec le serveur central 202 par l'intermédiaire d'une connexion 224, qui pourrait comprendre des chemins de connexion filaires et/ou sans fil, comme des communications par l'intermédiaire d'un réseau de communication mobile et/ou par internet. Par exemple, les communications pourraient se faire par l'intermédiaire d'un WPAN (réseau local de paquets sans fil) et/ou par l'intermédiaire d'un réseau UMTS (système de télécommunication mobile universel).

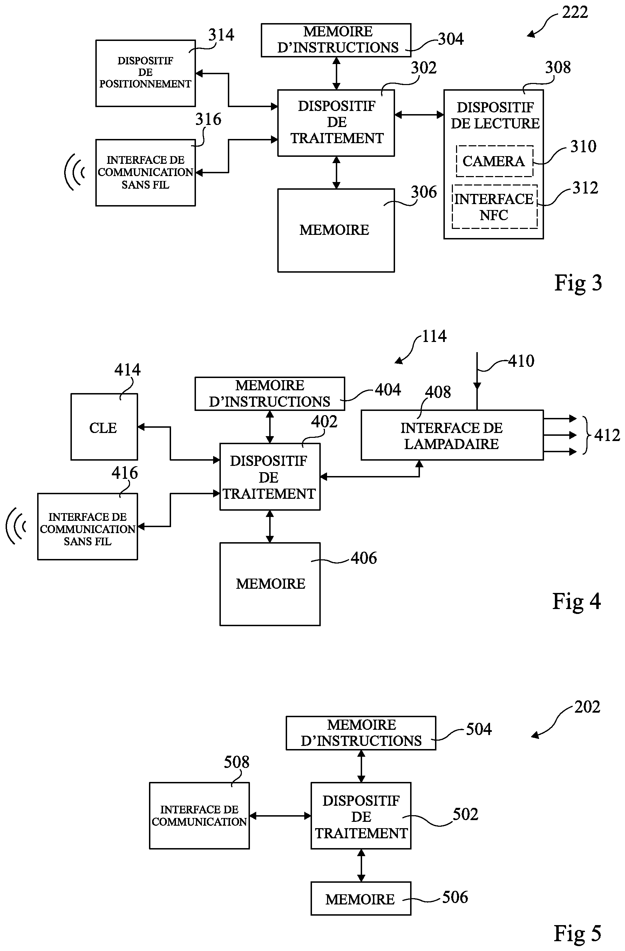

La figure 3 illustre plus en détail le dispositif d'installation 222 du système 200 de la figure 2 selon un exemple de réalisation.

Comme cela est illustré en figure 3, le dispositif 222 comprend par exemple un dispositif de traitement 302, qui comprend par exemple un ou plusieurs processeurs. Le dispositif de traitement 302 est par exemple agencé pour exécuter des instructions de logiciel mémorisées dans une mémoire d'instructions 304, bien que dans des variantes de réalisation les fonctions du dispositif d'installation 222 puissent au moins partiellement être mises en oeuvre sous la forme d'une solution matérielle dans le dispositif de traitement 302 indépendamment du logiciel. Le dispositif de traitement 302 est aussi par exemple couplé à une mémoire 306, qui mémorise par exemple des paramètres de configuration lus dans un nouveau contrôleur de lampadaire sans fil 114 à ajouter au système de commande d'éclairage, comme cela va être décrit plus en détail ci-après.

Le dispositif d'installation 222 comprend aussi par exemple un dispositif de lecture 308, capable de lire l'élément lisible par une machine 116 d'un nouveau contrôleur de lampadaire sans fil 114'.

Par exemple, dans un mode de réalisation, le dispositif de lecture 308 comprend une caméra numérique 310, comprenant par exemple un capteur d'image capable de capturer une image de l'élément lisible par une machine 116. Dans un tel cas, l'élément lisible par une machine 116 est par exemple un élément visuel, comme un code à barre ou un code QR (à réponse rapide).

En plus ou à la place, le dispositif de lecture 308 peut comprendre une interface NFC (communication en champ proche) 312, capable de communications sans fil avec l'élément lisible par une machine 116. Dans un tel cas, l'élément lisible par une machine 116 est par exemple un transpondeur RF, ou similaire.

Le dispositif d'installation 222 comprend aussi par exemple un dispositif de positionnement 314, indiquant une position géographique courante du dispositif d'installation 222. Par exemple, comme cela est connu dans la technique, le dispositif de positionnement 314 pourrait comprendre un dispositif d'un système de positionnement global (GPS) et/ou un dispositif de positionnement basé sur un réseau de communication.

Le dispositif d'installation 222 comprend aussi par exemple une interface de communication sans fil 316, qui permet des communications sans fil avec le serveur central 202 par l'intermédiaire de la connexion 224 de la figure 2.

Dans un mode de réalisation, le dispositif d'installation 222 pourrait être un smartphone dans lequel une application appropriée pour la mise en oeuvre des fonctions du dispositif d'installation a été installée.

La figure 4 illustre plus en détail un contrôleur de lampadaire sans fil 114 selon un exemple de réalisation. Le nouveau contrôleur de lampadaire sans fil 114' de la figure 2 comprend par exemple les mêmes éléments.

Comme cela est illustré, le contrôleur de lampadaire sans fil 114 comprend par exemple un dispositif de traitement 402, qui comprend par exemple un ou plusieurs processeurs. Le dispositif de traitement 402 est par exemple agencé pour exécuter des instructions de logiciel mémorisées dans une mémoire d'instructions 404, bien que dans des variantes de réalisation les fonctions du contrôleur de lampadaire sans fil puissent être au moins partiellement mises en oeuvre sous la forme d'une solution matérielle dans le dispositif de traitement 402 indépendamment du logiciel. Le dispositif de traitement 402 est aussi par exemple couplé à une mémoire 406, qui par exemple mémorise des paramètres de commande indiquant une séquence d'éclairage à appliquer pendant une période donnée par le contrôleur de lampadaire sans fil, telle qu'une période de 24 heures.

Le dispositif de traitement 402 est aussi par exemple couplé à une interface de lampadaire 408, qui reçoit par exemple une ou plusieurs entrées de ligne d'alimentation 410, et fournit des tensions d'alimentation sur une ou plusieurs lignes de sortie d'alimentation 412 vers un ou plusieurs éléments lumineux. Bien sûr, bien que l'interface de lampadaire 408 soit par exemple mise en oeuvre dans le boîtier du contrôleur de lampadaire sans fil 114, dans certains modes de réalisation l'interface de lampadaire 408 peut au moins partiellement être mise en oeuvre avec un ou plusieurs éléments lumineux 108.

L'interface de lampadaire 408 permet par exemple l'activation et la désactivation d'un ou plusieurs des éléments lumineux 108, et/ou une commande de luminosité d'un ou plusieurs des éléments lumineux 108, par exemple en contrôlant le courant fourni à ces éléments. Dans le cas d'un panneau de LED, tel que le panneau 113 en figure 1, l'interface de lampadaire 408 par exemple transmet aussi des informations à transmettre au panneau de LED pour être affichées. Dans le cas d'un détecteur de mouvement ou de présence, tel que le détecteur 112 de la figure 1, l'interface de lampadaire 408 reçoit aussi par exemple un signal provenant du détecteur indiquant la détection d'une présence, et en réponse commande un ou plusieurs des éléments lumineux 108 par l'intermédiaire des lignes 412. En outre, dans certains modes de réalisation, l'interface de lampadaire 408 reçoit aussi des informations de maintenance provenant desdits un ou plusieurs éléments lumineux 108, indiquant par exemple si l'élément lumineux fonctionne correctement.

Le contrôleur de lampadaire sans fil 114 comprend aussi par exemple une mémoire 414 mémorisant une clé chiffrée associée au contrôleur de lampadaire sans fil 114. Comme cela va être décrit plus en détail ci-après, la clé chiffrée permet par exemple une activation sécurisée du contrôleur de lampadaire sans fil 114 pendant la procédure d'installation. La mémoire 414 est par exemple protégée des tentatives de falsification par un ou plusieurs mécanismes de protection, comme cela est connu dans la technique.

Comme le dispositif d'installation 222, le contrôleur de lampadaire sans fil 114 comprend aussi par exemple une interface de communication sans fil 416, qui permet des communications sans fil avec d'autres dispositifs, comme d'autres contrôleurs de lampadaires sans fil 114 et/ou avec l'un des modules de segment 204 à 210 de la figure 2.

La figure 5 illustre plus en détail le serveur central 202 de la figure 2 selon un exemple de réalisation.

Comme cela est illustré, le serveur central 202 comprend par exemple un dispositif de traitement 502, qui comprend par exemple un ou plusieurs processeurs. Le dispositif de traitement 502 est par exemple agencé pour exécuter des instructions de logiciel mémorisées dans une mémoire d'instructions 504, bien que dans des variantes de réalisation, les fonctions du serveur central 202 puissent être au moins partiellement mises en oeuvre sous forme d'une solution matérielle dans le dispositif de traitement 502 indépendamment du logiciel. Le dispositif de traitement 502 est aussi par exemple couplé à une mémoire 506, qui par exemple mémorise des informations concernant le système de commande d'éclairage 200. Par exemple, la mémoire 506 mémorise des données de position associées à chaque contrôleur de lampadaire sans fil 114 et à chaque module de segment 204 à 210 de la figure 2. En outre, la mémoire 506 mémorise aussi par exemple des clés de référence associées à chaque contrôleur de lampadaire sans fil 114 dans le système de commande d'éclairage, qui par exemple correspondent à des clés mémorisées dans la mémoire 414 des contrôleurs de lampadaire sans fil 114, comme cela va être décrit plus en détail ci-après.

Le serveur central 202 comprend aussi par exemple une interface de communication 508, permettant par exemple des communications filaires et/ou sans fil avec le dispositif d'installation 222 et avec chacun des modules de segments 204 à 210.

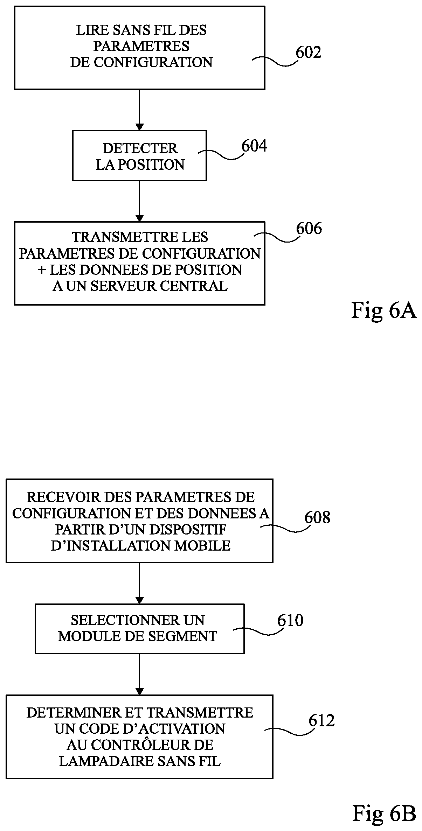

La figure 6A est un organigramme représentant un exemple d'opérations effectuées par le dispositif d'installation 222 de la figure 2 lorsqu'un nouveau contrôleur de lampadaire sans fil, tel que le contrôleur référencé 114' en figure 2, doit être ajouté au système de commande d'éclairage 200.

Dans une première opération 602, le dispositif d'installation 222 lit des paramètres de configuration à partir de l'élément lisible par une machine 116 du nouveau contrôleur de lampadaire sans fil 114'. Par exemple, le dispositif d'installation 222 utilise le dispositif de lecture 308 illustré en figure 3.

Les paramètres de configuration comprennent par exemple un identificateur unique, comme un numéro de série du contrôleur de lampadaire sans fil 114'. Les paramètres de configuration peuvent en plus ou à la place inclure d'autres informations, comme les fonctions du contrôleur de lampadaire sans fil 114', indiquant par exemple le nombre d'éléments lumineux 108 qui peuvent être contrôlés, les options de luminosité qui peuvent être sélectionnées, les entrées disponibles, telles que des capteurs ou des fonctions de mesure, etc. En outre, des paramètres de configuration peuvent en plus ou à la place inclure une clé chiffrée associée au contrôleur de lampadaire sans fil 114'.

Dans une opération suivante 604, le dispositif d'installation 222 détecte sa position courante, par exemple en utilisant le dispositif de positionnement 314 illustré en figure 3. Par exemple, la position est fournie sous forme d'une valeur de longitude et d'une valeur de latitude, bien que d'autres formats des données de position soient possibles.

Dans une opération suivante 606, les paramètres de configuration et les données de position sont transmises au serveur central 202, par l'intermédiaire de la connexion 224 représentée en figure 2.

La figure 6B est un organigramme représentant un exemple des opérations effectuées par le serveur central 202 pendant l'installation d'un nouveau contrôleur de lampadaire sans fil, tel que le contrôleur référencé 114' en figure 2.

Comme cela est illustré, dans une opération 608, le serveur central 202 reçoit par exemple les paramètres de configuration et les données de position à partir du dispositif d'installation 222. Le serveur central 202 vérifie par exemple la validité de la clé chiffrée, par exemple en la comparant à une clé mémorisée dans sa mémoire en association avec l'identificateur du contrôleur de lampadaire sans fil 114'. En particulier, la mémoire 506 du serveur central mémorise par exemple une liste d'identificateurs de tous les contrôleurs de lampadaire sans fil déjà installés dans le système et à installer dans le système, et aussi une copie de la clé associée à chaque contrôleur de lampadaire sans fil.

Dans une opération suivante 610, par exemple le serveur central 202 affecte un module de segment, comme le module de segment 204 de la figure 2, au contrôleur de lampadaire sans fil 114', sur la base des données de position reçues à partir du dispositif d'installation 222. En particulier, le serveur central 202 par exemple sélectionne le module de segment qui est physiquement le plus proche de la position géographique du dispositif d'installation 222. En effet, on suppose que le dispositif d'installation 222 est à proximité immédiate du contrôleur de lampadaire sans fil 114' pendant l'installation, et ainsi la position du dispositif d'installation 222 est considérée comme étant aussi la position du contrôleur de lampadaire sans fil 114'. Pour sélectionner le module de segment le plus proche, des données de position associées à chaque module de segment sont par exemple comparées aux données de position du dispositif d'installation 222 pour déterminer les distances qui séparent le dispositif d'installation de chaque module de segment, et le module de segment ayant la distance la plus faible est par exemple sélectionné.

Dans certains modes de réalisation, des informations supplémentaires peuvent être prises en compte lors de la sélection du module de segment approprié, comme la présence d'obstacles, comme des bâtiments ou des monticules, qui peuvent interférer avec des communications sans fil entre le contrôleur de lampadaire sans fil 114' et un ou plusieurs des modules de segment.

Dans une opération suivante 612, un code d'activation est généré par le serveur central 202, et transmis au contrôleur de lampadaire sans fil 114' par l'intermédiaire du module de segment sélectionné dans l'opération 610. En particulier, sur la base de l'identificateur unique et/ou de la clé chiffrée reçue du contrôleur de lampadaire sans fil, un code d'activation approprié est généré et transmis au module de segment sélectionné, qui à son tour transmet sans fil le code d'activation au contrôleur de lampadaire sans fil 114'.

Par exemple, dans un mode de réalisation, le code d'activation comprend la clé chiffrée du contrôleur de lampadaire sans fil 114', et est transmis accompagné de l'identificateur unique du contrôleur de lampadaire sans fil 114'. Par exemple, cela permet au contrôleur de lampadaire sans fil 114' de vérifier que le code d'activation est authentique. En outre, le code d'activation peut comprendre d'autres données, telles que les données de position du contrôleur de lampadaire sans fil et/ou des données mémorisées avec le code QR associé au contrôleur de lampadaire sans fil 114'. Le code d'activation peut aussi inclure des données qui permettent au contrôleur de lampadaire sans fil 114' de communiquer dans le réseau, par exemple avec son module de segment affecté et avec un ou plusieurs des autres contrôleurs de lampadaire sans fil se trouvant dans son segment.

Dans un mode de réalisation, le serveur central 202 est agencé pour mémoriser les données de position dans une mémoire en association avec l'identificateur du contrôleur de lampadaire sans fil 114', et pour transmettre les données de position au contrôleur de lampadaire sans fil 114', par exemple en tant que partie du code d'activation. Dans des communications futures avec le contrôleur de lampadaire sans fil 114', les données de position fournissent par exemple un autre moyen pour authentifier le contrôleur.

En réponse à la réception du code d'activation provenant du serveur central 202, le nouveau contrôleur de lampadaire sans fil 114' est par exemple activé, et établit des connexions sans fil avec des contrôleurs de lampadaire sans fil 114 voisins déjà installés dans le système, et par exemple mémorise des données indiquant le module de segment qui lui est affecté, comme un identificateur unique du module de segment. Le nouveau contrôleur de lampadaire sans fil 114' est ensuite par exemple capable de recevoir des données à partir du serveur central 202 et/ou d'autres contrôleurs de lampadaires sans fil, par exemple pour modifier ou pour se substituer à sa séquence d'éclairage programmée, et aussi d'émettre des données, par exemple indiquant aux contrôleurs de lampadaires sans fil voisins le moment où la présence d'un piéton ou d'un véhicule a été détectée par son détecteur de présence 112.

Un avantage des modes de réalisation décrits ici est qu'un nouveau contrôleur de lampadaire sans fil peut être installé dans un système de commande d'éclairage d'une façon rapide et efficace, en sélectionnant un module de segment approprié sur la base de données de position associées au dispositif d'installation. En outre, l'utilisation de la clé chiffrée permet d'effectuer l'installation d'un nouveau contrôleur de lampadaire sans fil de façon sécurisée.

Avec la description ainsi faite d'au moins un mode de réalisation illustratif, diverses altérations, modifications et améliorations apparaîtront facilement à l'homme de l'art.

Par exemple, bien qu'un seul dispositif d'installation ait été décrit, il sera clair pour l'homme de l'art qu'il pourrait y avoir plusieurs dispositifs d'installation fonctionnant dans le système de commande d'éclairage, qui pourraient être utilisés en parallèle pour installer de nouveaux contrôleurs sans fil.

## Revendications

1. Procédé d'installation d'un nouveau contrôleur de lampadaire sans fil (114') dans un système de commande d'éclairage , le procédé comprenant les étapes suivantes :
lire, par un dispositif mobile d'installation (222), des paramètres de configuration à partir d'un élément, lisible par machine (116), du nouveau contrôleur de lampadaire sans fil (114');
déterminer des données de position indiquant une position courante du dispositif mobile d'installation (222) ;
**caractérisé en ce que** :
le système de commande d'éclairage comprend un serveur central (202), des contrôleurs de lampadaire sans fil (114) et une pluralité de modules de segment (204, 206, 208, 210), chacun des modules de segment étant en communication avec un certain nombre de contrôleurs de lampadaire sans fil (114) qui sont dans sa zone environnante, chaque contrôleur de lampadaire sans fil (114) d'un segment étant à portée directe de communications sans fils, ou par l'intermédiaire d'un ou plusieurs autres contrôleurs de lampadaire sans fil (114), de son module de segment (204, 206, 208, 210) correspondant, les modules de segment (204, 206, 208, 210) étant couplés au serveur central (202) ; le procédé comprenant en outre les étapes suivantes :
transmettre, par le dispositif mobile d'installation (222), les paramètres de configuration et les données de position au serveur central (202); et
recevoir, par le nouveau contrôleur de lampadaire sans fil (114') par l'intermédiaire d'un module de segment (204, 206, 208, 210) sélectionné sur la base des données de position, un code d'activation généré par le serveur central (202) sur la base au moins partiellement d'un ou plusieurs des paramètres de configuration.

2. Procédé selon la revendication 1, dans lequel les paramètres de configuration comprennent un ou plusieurs des éléments suivants :
une clé chiffrée associée au contrôleur de lampadaire sans fil ;
un identificateur associé au contrôleur de lampadaire sans fil; et
des données indiquant des fonctions du contrôleur de lampadaire sans fil.

3. Procédé selon la revendication 2, dans lequel, quand les paramètres de configuration comprennent la clé chiffrée, le serveur central est adapté à comparer la clé chiffrée une clé de référence associée au nouveau contrôleur de lampadaire sans fil (114').

4. Procédé selon la revendication 2, comprenant en outre, quand les paramètres de configuration comprennent l'identificateur:
mémoriser par le serveur central les données de position dans une mémoire (506) en association avec l'identificateur du nouveau contrôleur de lampadaire sans fil (114'); et
transmettre par le serveur central les données de position au nouveau contrôleur de lampadaire sans fil (114').

5. Procédé selon l'une quelconque des revendications 1 à 4, dans lequel l'élément lisible par machine (116) est l'un des éléments suivants :
une image lisible par une caméra (310) du dispositif mobile d'installation ; et
un transpondeur sans fil lisible par une interface de communication en champ proche (312) du dispositif mobile d'installation.

6. Système de commande d'éclairage comprenant des contrôleurs de lampadaire sans fil (114),
**caractérisé en ce que** le système de commande d'éclairage comprend en outre un serveur central (202) et une pluralité de modules de segment (204, 206, 208, 210), chacun des modules de segment étant en communication avec un certain nombre de contrôleurs de lampadaire sans fil (114) qui sont dans sa zone environnante, chaque contrôleur de lampadaire sans fil (114) d'un segment étant à portée directe de communications sans fils, ou par l'intermédiaire d'un ou plusieurs autres contrôleurs de lampadaire sans fil (114), de son module de segment (204, 206, 208, 210) correspondant, les modules de segment (204, 206, 208, 210) étant couplés au serveur central (202), le serveur central étant adapté à :
recevoir, à partir d'un dispositif mobile d'installation (222), des paramètres de configuration associés à un nouveau contrôleur de lampadaire sans fil (114') à installer dans le système, et des données de position associées au dispositif mobile d'installation (222), ledit dispositif mobile d'installation (222) étant adapté à lire les paramètres de configuration à partir d'un élément, lisible par machine (116), du nouveau contrôleur de lampadaire sans fil (114');
générer un code d'activation sur la base au moins partiellement d'un ou plusieurs des paramètres de configuration ;
sélectionner, sur la base des données de position, l'un de la pluralité de modules de segment (204, 206, 208, 210) du système de commande d'éclairage ; et
transmettre le code d'activation au nouveau contrôleur de lampadaire sans fil (114') par l'intermédiaire du module de segment (204, 206, 208, 210) sélectionné.

7. Système selon la revendication 6, dans lequel les paramètres de configuration comprennent une clé chiffrée associée au nouveau contrôleur de lampadaire sans fil (114'), et dans lequel le code d'activation comprend ladite clé chiffrée.

## Patentansprüche

1. Verfahren zur Installation einer neuen drahtlosen Lampensteuerung (114') in einem Lichtsteuersystem, wobei das Verfahren Folgendes aufweist:
Lesen von Einstellparametern von einem maschinenlesbaren Element (116) der neuen drahtlosen Lampensteuerung (114') durch eine mobile Installationsvorrichtung (222);
Bestimmen von Positionsdaten, die eine aktuelle Position der mobilen Installationsvorrichtung (222) anzeigen;
**dadurch gekennzeichnet, dass**:
das Lichtsteuersystem einen zentralen Server (202), drahtlose Lampensteuerungen (114) und eine Vielzahl von Segmentmodulen (204, 206, 208, 210) aufweist, wobei jedes der Segmentmodule mit einer bestimmten Anzahl von drahtlosen Lampensteuerungen (114) in seiner Umgebung in Verbindung steht, wobei jede drahtlose Lampensteuerung (114) eines Segments im direkten drahtlosen Kommunikationsbereich oder im Kommunikationsbereich über eine oder mehrere andere drahtlose Lampensteuerungen (114) seines entsprechenden Segmentmoduls (204, 206, 208, 210) steht, wobei die Segmentmodule (204, 206, 208, 210) mit dem zentralen Server (202) gekoppelt sind; wobei das Verfahren ferner die folgenden Schritte aufweist:
Übertragen der Setup-Parameter und der Positionsdaten durch die mobile Installationsvorrichtung (222) an den zentralen Server (202); und
Empfangen eines Aktivierungscodes, der vom zentralen Server (202) basierend auf wenigstens teilweise einem oder mehreren der Einstellparameter erzeugt wird, durch die neue drahtlose Lampensteuerung (114') über ein Segmentmodul (204, 206, 208, 210), das basierend auf den Positionsdaten ausgewählt wurde.

2. Verfahren nach Anspruch 1, wobei die Einstellparameter einen oder mehrere der folgenden aufweisen:
einen verschlüsselten Schlüssel, der mit der drahtlosen Lampensteuerung assoziiert ist;
einen Identifikator, der mit der drahtlosen Lampensteuerung assoziiert ist; und
Daten, die Funktionen der drahtlosen Lampensteuerung anzeigen.

3. Verfahren nach Anspruch 2, wobei, wenn die Konfigurationsparameter den verschlüsselten Schlüssel aufweisen, der zentrale Server geeignet ist, den verschlüsselten Schlüssel mit einem Referenzschlüssel zu vergleichen, der mit der neuen drahtlosen Lampen-Steuerung (114') assoziiert ist.

4. Verfahren nach Anspruch 2, das ferner, wenn die Einstellparameter den Identifikator aufweisen, Folgendes aufweist:
Speichern der Positionsdaten in einem Speicher (506) in Verbindung mit einem Identifikator der neuen drahtlosen Lampensteuerung (114') durch den zentralen Server; und
Übertragen der Positionsdaten durch den zentralen Server an die neue drahtlose Lampensteuerung (114').

5. Verfahren nach einem der Ansprüche 1 bis 4, wobei das maschinenlesbare Element (116) eines der folgenden ist:
ein Bild, das von einer Kamera (310) der mobilen Installationsvorrichtung lesbar ist; und
einen drahtlosen Transponder, der von einem Nahfeldkommunikations-Interface (312) der mobilen Installationsvorrichtung lesbar ist.

6. Lichtsteuersystem mit drahtlosen Lampensteuerungen (114), **dadurch gekennzeichnet, dass** das Lichtsteuersystem ferner einen zentralen Server (202) und eine Vielzahl von Segmentmodulen (204, 206, 208, 210) aufweist, wobei jedes der Segmentmodule mit einer bestimmten Anzahl von drahtlosen Lampensteuerungen (114) in seiner Umgebung in Verbindung steht, wobei jede drahtlose Lampensteuerung (114) eines Segments, das sich im direkten drahtlosen Kommunikationsbereich oder im Kommunikationsbereich über eine oder mehrere andere drahtlose Lampensteuerungen (114) seines entsprechenden Segmentmoduls (204, 206, 208, 210) befindet, wobei die Segmentmodule (204, 206, 208, 210) mit dem zentralen Server (202) gekoppelt sind, wobei der zentrale Server geeignet ist zum:
Empfangen von einer mobilen Installationsvorrichtung (222) von Einstellparametern, die mit einer neuen drahtlosen Lampensteuerung (114') assoziiert sind, die in dem System installiert werden soll, und von Positionsdaten, die der mobilen Installationsvorrichtung (222) zugeordnet sind, wobei die mobile Installationsvorrichtung (222) geeignet ist, die Einstellparameter von einem maschinenlesbaren Element (116) der neuen drahtlosen Lampensteuerung (114') zu lesen;
Erzeugen eines Aktivierungscodes, der wenigstens teilweise auf einem oder mehreren der Einstellparameter basiert;
Auswählen eines aus einer Vielzahl von Segmentmodulen (204, 206, 208, 210) des Lichtsteuerungssystems basierend auf den Positionsdaten; und
Übertragen des Aktivierungscodes an die neue drahtlose Lampensteuerung (114') über das ausgewählte Segmentmodul (204, 206, 208, 210).

7. System nach Anspruch 6, wobei die Einstellparameter einen verschlüsselten Schlüssel aufweisen, der der drahtlosen Lampensteuerung (114') zugeordnet ist, und wobei der Aktivierungscode den verschlüsselten Schlüssel aufweist.

## Claims

1. A method of installation of a new wireless lamp controller (114') in a lighting control system, the method comprising:
reading, by a mobile installation device (222), setup parameters from a machine readable element (116) of said new wireless lamp controller (114');
determining position data indicating a current position of the mobile installation device (222);
**characterized in that**:
the lighting control system comprises a central server (202), wireless lamp controllers (114) and a plurality of segment modules (204, 206, 208, 210), each of the segment modules being in communication with a certain number of wireless lamp controllers (114) in its surrounding area, each wireless lamp controller (114) of a segment being in direct wireless communication range or in communication range via one or more other wireless lamp controllers (114), of its corresponding segment module (204, 206, 208, 210), the segment modules (204, 206, 208, 210) being coupled to the central server (202); the method further comprising the following steps:
transmitting, by the mobile installation device (222), the setup parameters and the position data to the central server (202); and
receiving, by the new wireless lamp controller (114') via a segment module (204, 206, 208, 210) selected based on the position data, an activation code generated by the central server (202) based at least partially on one or more of the setup parameters.

2. The method of claim 1, wherein said setup parameters comprise one or more of:
an encrypted key associated with said wireless lamp controller;
an identifier associated with said wireless lamp controller; and
data indicating functions of said wireless lamp controller.

3. The method of claim 2, wherein, when the setup parameters comprise the encrypted key, said central server is adapted to compare said encrypted key with a reference key associated with said new wireless lamp controller (114').

4. The method of claim 2, further comprising, when the setup parameters comprise the identifier:
storing by said central server said position data in a memory (506) in association with an identifier of said new wireless lamp controller (114'); and
transmitting by said central server said position data to said new wireless lamp controller (114').

5. The method of any of claims 1 to 4, wherein said machine readable element (116) is one of:
an image readable by a camera (310) of said mobile installation device; and
a wireless transponder readable by a near-field communications interface (312) of said mobile installation device.

6. A lighting control system comprising wireless lamp controllers (114), **characterized in that** the lighting control system further comprises a central server (202) and a plurality of segment modules (204, 206, 208, 210), each of the segment modules being in communication with a certain number of wireless lamp controllers (114) in its surrounding area, each wireless lamp controller (114) of a segment being in direct wireless communication range or in communication range via one or more other wireless lamp controllers (114), of its corresponding segment module (204, 206, 208, 210), the segment modules (204, 206, 208, 210) being coupled to the central server (202), the central server being adapted to:
receive, from a mobile installation device (222), setup parameters associated with a new wireless lamp controller (114') to be installed in said system, and position data associated with said mobile installation device (222), the mobile installation device (222) being adapted to read the setup parameters from a machine readable element (116) of the new wireless lamp controller (114');
generate an activation code based at least partially on one or more of said setup parameters;
select, based on said position data, one of a plurality of segment modules (204, 206, 208, 210) of said lighting control system; and
transmit said activation code to said new wireless lamp controller (114') via said selected segment module (204, 206, 208, 210).

7. The system of claim 6, wherein the setup parameters comprise an encrypted key associated with said wireless lamp controller (114'), and wherein said activation code includes said encrypted key.
